# EUROPEAN PATENT APPLICATION

(11) **EP 2 724 887 A2**
(43) Date of publication of application: **30.04.2014**
(21) Application number: 13005060.2
(22) Date of filing: 23.10.2013
(51) Int. Cl.: B60L 11/18

(54) **Non-contact charging apparatus for mobile body and non-contact charging method for mobile body**

(30) Priority: 29.10.2012 JP 2012237714
(71) Applicant: Hitachi Ltd., Tokyo 100-8280 (JP)
(72) Inventor: Imazu, Shin, Kokubunji-shi Tokyo 185-0014 (JP); Tohma, Takanori, Kokubunji-shi Tokyo 185-0014 (JP); Tachikawa, Makoto, Tokyo 100-8280 (JP); Baba, Atsushi, Tokyo 100-8280 (JP); Katayama, Toshio, Tokyo 100-8280 (JP)
(74) Representative: Strehl Schübel-Hopf & Partner

(57) **Abstract**

The present invention efficiently transmits electric power in a non-contact manner to a mobile body having constraints with respect to the installation of a receiving part therein. A non-contact charging apparatus for a mobile body has a power-receiving device disposed in an electric car, and a power-transmitting device disposed in a manner of non-contact with the power-receiving device. The power-receiving device has a plurality of power-receiving coils distributively arranged in prescribed locations of the electric car to receive electric power from the outside. The power-transmitting device has a plurality of power-transmitting coils arranged in prescribed locations outside of the electric car corresponding to the plurality of power-receiving coils to transmit electric power. The non-contact charging apparatus for a mobile body transmits electric power in a non-contact manner from the plurality of power-transmitting coils to the plurality of power-receiving coils and charges a secondary battery. Since a plurality of power-receiving coils are provided, electric power can be transmitted efficiently even when there are installation-space or installation-shape constraints.

## Description

### BACKGROUND OF THE INVENTION

### 1. Field of the Invention

The present invention relates to a non-contact charging apparatus for a mobile body and a non-contact charging method for a mobile body.

### 2. Description of the Related Art

Various types of electrically operated mobile bodies, such as electric cars, electric buses, electric trucks, and electric motorcycles have been proposed in line with an increase in environmental awareness and the development of secondary battery and electric motor technologies. These electrically operated mobile bodies charge a secondary battery, and drive an electric motor using power drawn from the secondary battery to achieve propulsion.

A method for charging the secondary battery by connecting an electric cable to the secondary battery, and a method for charging the secondary battery using a non-contact mode are known. The work involved in the method that uses the electric cable is a nuisance, and as such, the development of a non-contact charging mode is promising (refer to Japanese Patent Application Laid-open No. 2011-258807 and Japanese Patent Application Laid-open No. 2011-176914).

A mobile body, such as an electric car, has size and shape constraints in terms of places where a power-receiving device can be installed, and it is therefore difficult to charge a secondary battery mounted in the mobile body in a short period of time. For example, when a power-receiving coil is provided in the floor of the car body, the problems are that it is difficult to find an area of sufficient size to provide the power-receiving coil, and it is impossible to enhance power transmission efficiency..

Accordingly, an object of the present invention is to provide a non-contact charging-apparatus for a mobile body and a non-contact charging method for a mobile body that make it possible to enhance the efficiency of power transmission in a non-contact manner by distributively arranging a plurality of receiving parts in prescribed locations of a mobile body, and, in addition, arranging a plurality of transmitting parts corresponding to the plurality of receiving parts in prescribed locations outside of the mobile body.

### SUMMARY OF THE INVENTION

To solve the aforementioned problems, a non-contact charging apparatus for a mobile body related to the present invention is for supplying power to a mobile body in a non-contact manner, and comprises a power-receiving device provided in the mobile body, and a power-transmitting device provided in a manner of non-contact with the power-receiving device, wherein the power-receiving device is distributively arranged in prescribed locations of the mobile body and comprises a plurality of receiving parts to receive electric power from outside, and the power-transmitting device is arranged in prescribed locations outside of the mobile body corresponding to the plurality of receiving parts, and comprises a plurality of transmitting parts to transmit electric power.

The plurality of transmitting parts are primary coils, the plurality of receiving parts are secondary coils, and the configuration may be such that the power-transmitting device transmits electric power to the power-receiving device by using electromagnetic induction.

According to the present invention, a plurality of receiving parts are prepared and distributively arranged in a mobile body, making it possible for electric power to be transmitted in a non-contact manner to the plurality of receiving parts from a plurality of transmitting parts, thereby making it possible to enhance power transmission efficiency while satisfying constraints such as installable areas in the mobile body.

### BRIEF DESCRIPTION OF THE DRAWINGS

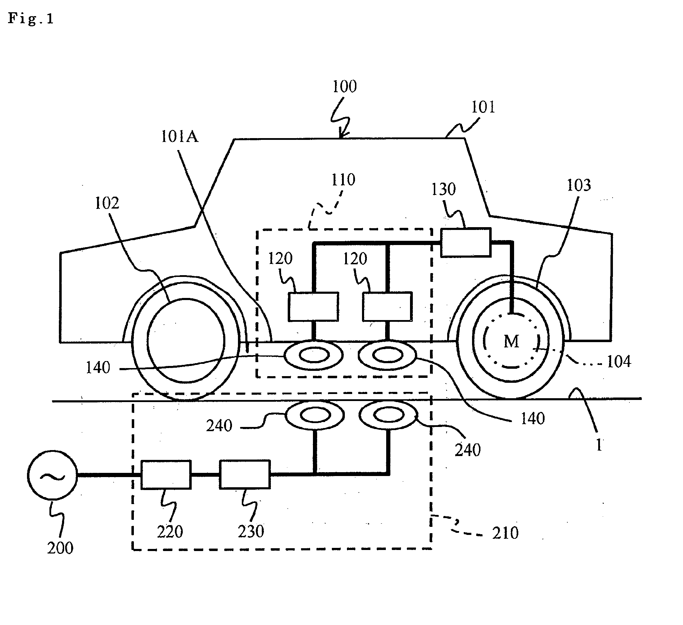

Fig. 1 is a schematic diagram related to a first embodiment showing an example of a configuration for providing a non-contact charging apparatus in a mobile body;

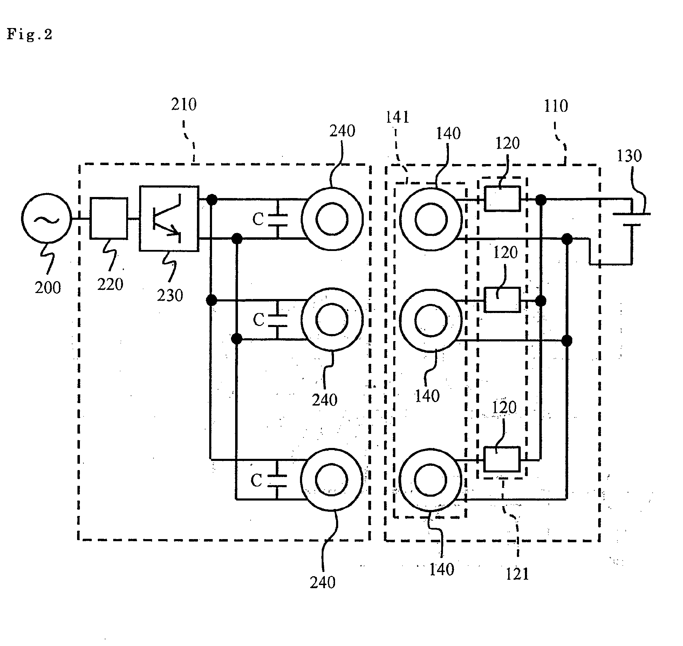

Fig. 2 is a block diagram showing an example of a non-contact charging apparatus having a power-transmitting device for driving a plurality of power-transmitting coils with a single driving transformer, and a power-receiving device in which a plurality of power-receiving coils are connected in parallel;

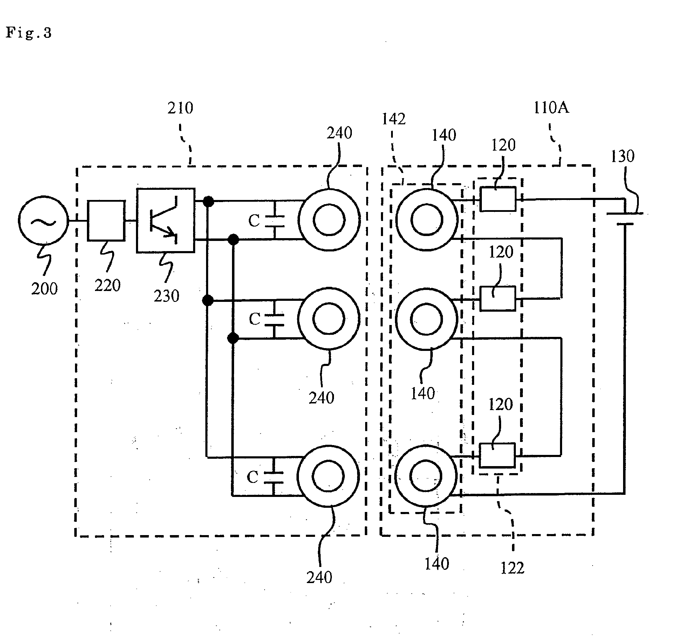

Fig. 3 is a block diagram related to a second embodiment showing an example of a non-contact charging apparatus having a power-transmitting device for driving a plurality of power-transmitting coils with a single driving transformer, and a power-receiving device in which a plurality of power-receiving coils are connected in series;

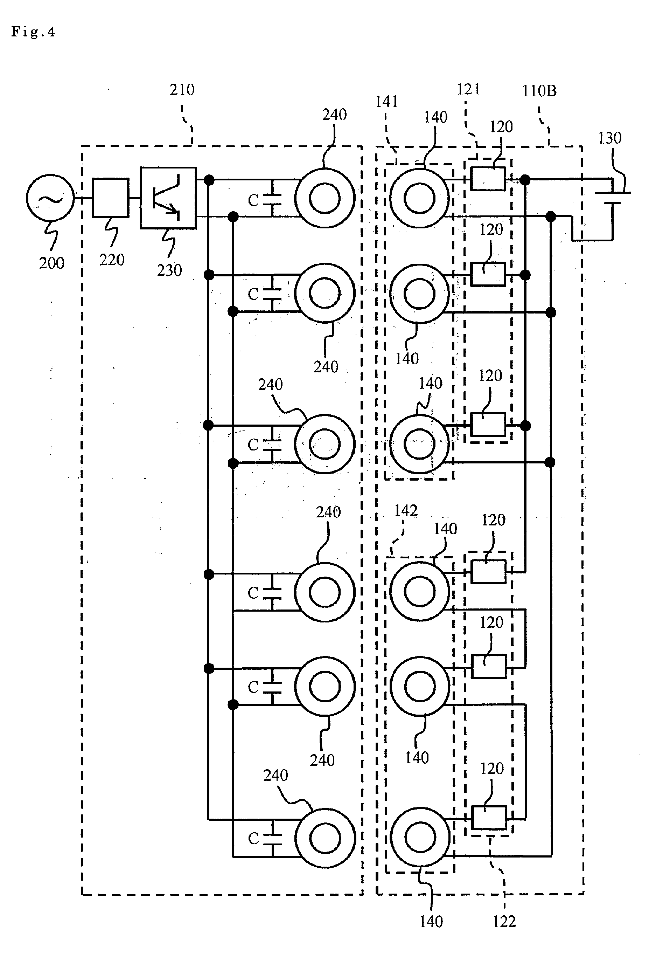

Fig. 4 is a block diagram related to a third embodiment showing an example of a power-transmitting device for driving a plurality of power-transmitting coils with a single driving transformer, and a power-receiving device in which a plurality of power-receiving coils connected in parallel and a plurality of power-receiving coils connected in series are connected in parallel;

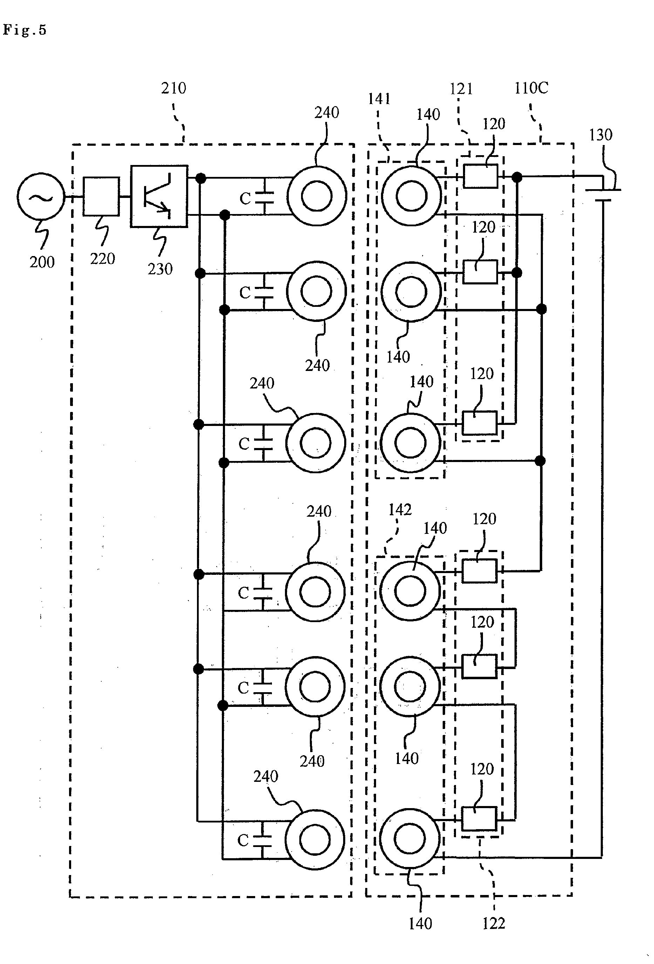

Fig. 5 is a block diagram related to a fourth embodiment showing an example of a power-transmitting device for driving a plurality of power-transmitting coils with a single driving transformer, and a power-receiving device in which a plurality of power-receiving coils connected in parallel and a plurality of power-receiving coils connected in series are connected in series;

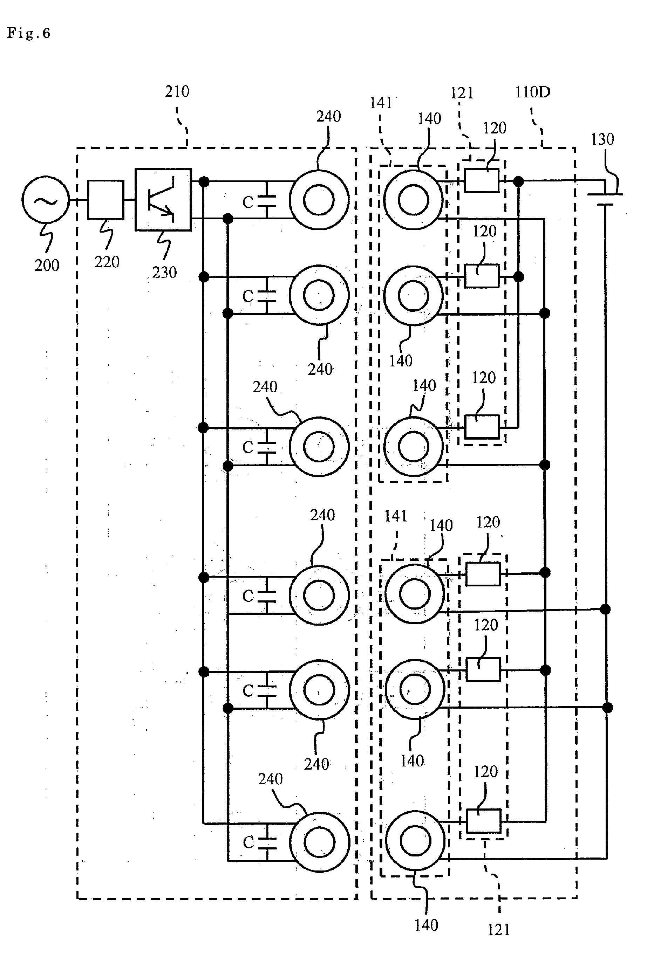

Fig. 6 is a block diagram related to a fifth embodiment showing an example of a power-transmitting device for driving a plurality of power-transmitting coils with a single driving transformer, and a power-receiving device in which a plurality of power-receiving coils connected in parallel and a plurality of power-receiving coils connected in parallel are connected in series;

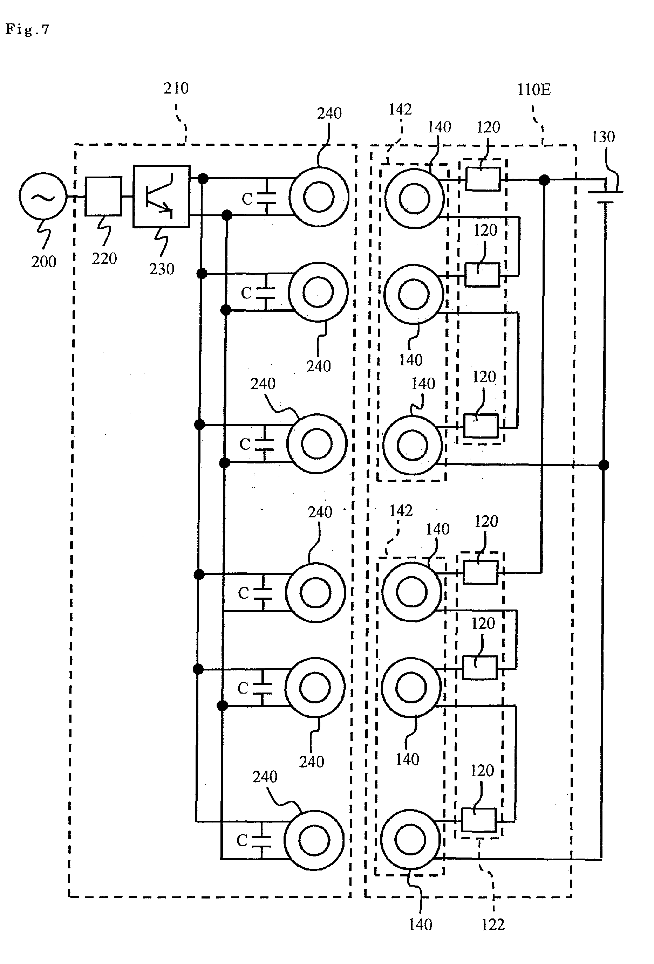

Fig. 7 is a block diagram related to a sixth embodiment showing an example of a power-transmitting device for driving a plurality of power-transmitting coils with a single driving transformer, and a power-receiving device in which a plurality of power-receiving coils connected in series and a plurality of power-receiving coils connected in series are connected in parallel;

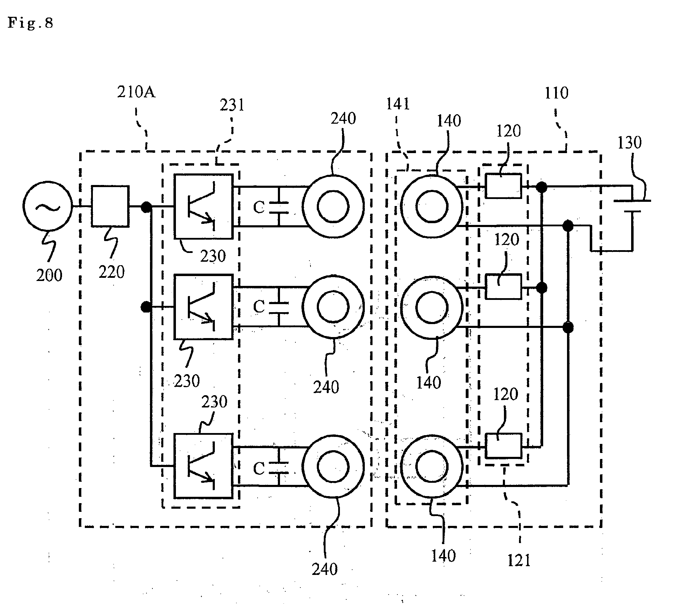

Fig. 8 is a block diagram related to a seventh embodiment showing an example of a power-transmitting device for driving a plurality of power-transmitting coils with a plurality of driving transformers, and a power-receiving device in which a plurality of power-receiving coils are connected in parallel;

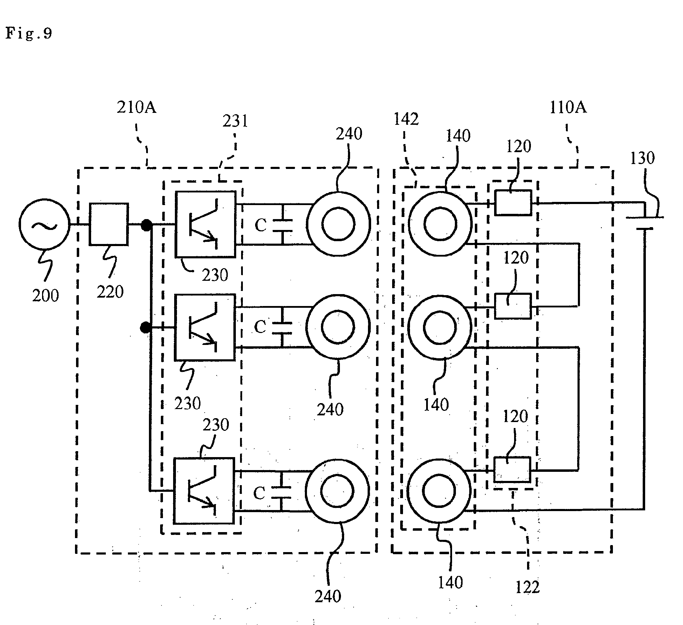

Fig. 9 is a block diagram related to an eighth embodiment showing an example of a power-transmitting device for driving a plurality of power-transmitting coils with a plurality of driving transformers, and a power-receiving device in which a plurality of power-receiving coils are connected in series;

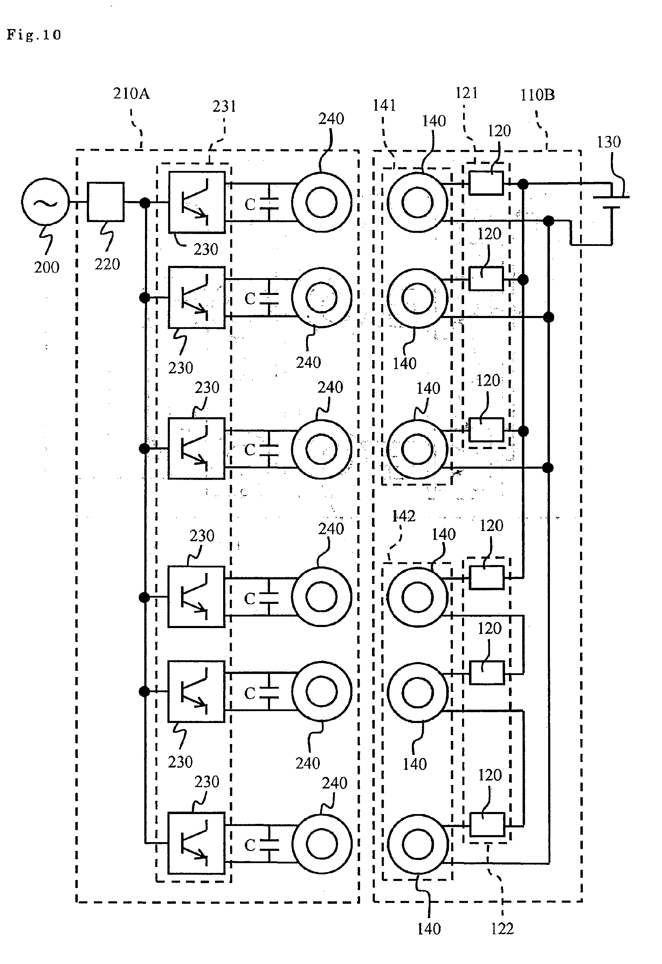

Fig. 10 is a block diagram related to a ninth embodiment showing an example of a power-transmitting device for driving a plurality of power-transmitting coils with a plurality of driving transformers, and a power-receiving device in which a plurality of power-receiving coils connected in parallel and a plurality of power-receiving coils connected in series are connected in parallel;

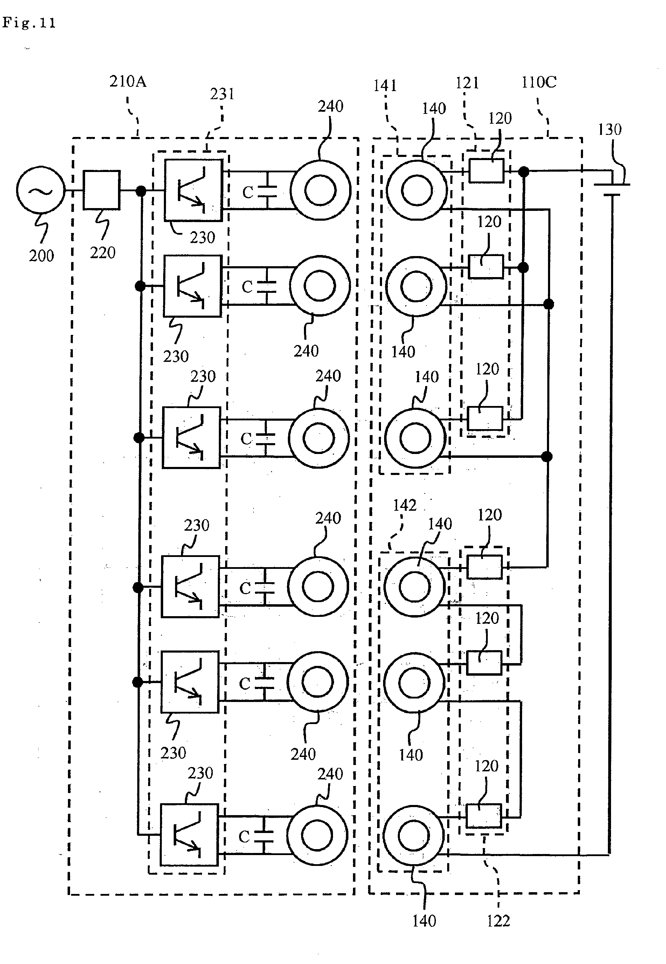

Fig. 11 is a block diagram related to a tenth embodiment showing an example of a power-transmitting device for driving a plurality of power-transmitting coils with a plurality of driving transformers, and a power-receiving device in which a plurality of power-receiving coils connected in parallel and a plurality of power-receiving coils connected in series are connected in series;

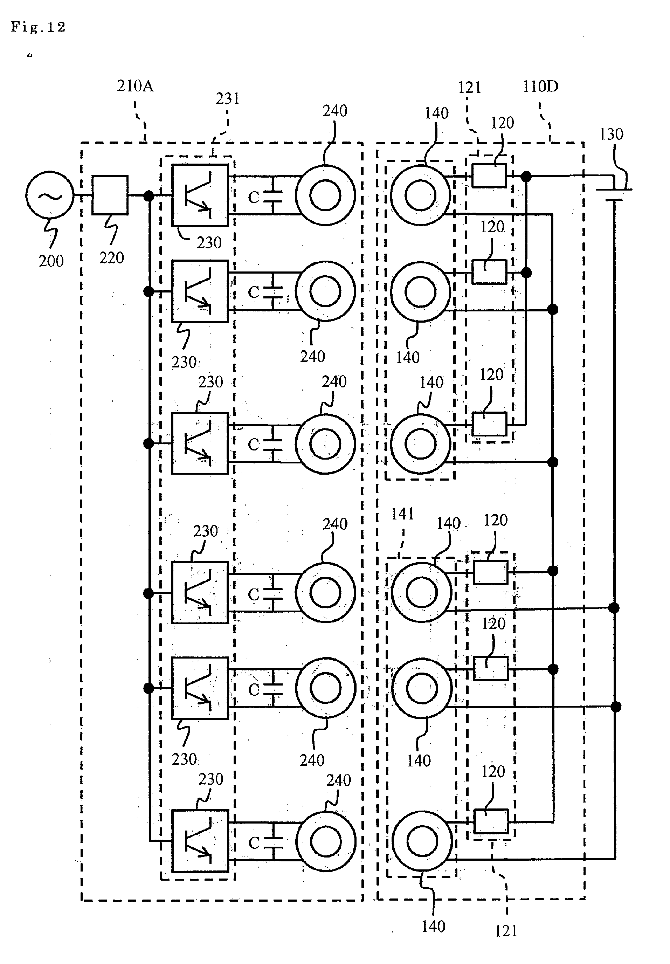

Fig. 12 is a block diagram related to an eleventh embodiment showing an example of a power-transmitting device for driving a plurality of power-transmitting coils with a plurality of driving transformers, and a power-receiving device in which a plurality of power-receiving coils connected in parallel and a plurality of power-receiving coils connected in parallel are connected in series;

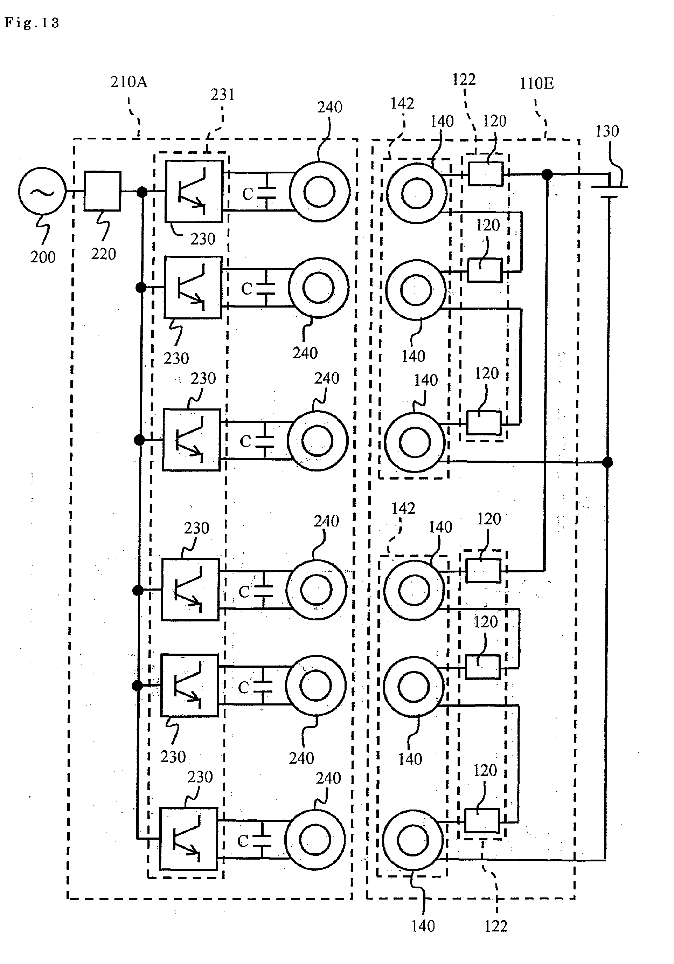

Fig. 13 is a block diagram related to a twelfth embodiment showing an example of a power-transmitting device for driving a plurality of power-transmitting coils with a plurality of driving transformers, and a power-receiving device in which a plurality of power-receiving coils connected in series and a plurality of power-receiving coils connected in series are connected in parallel;

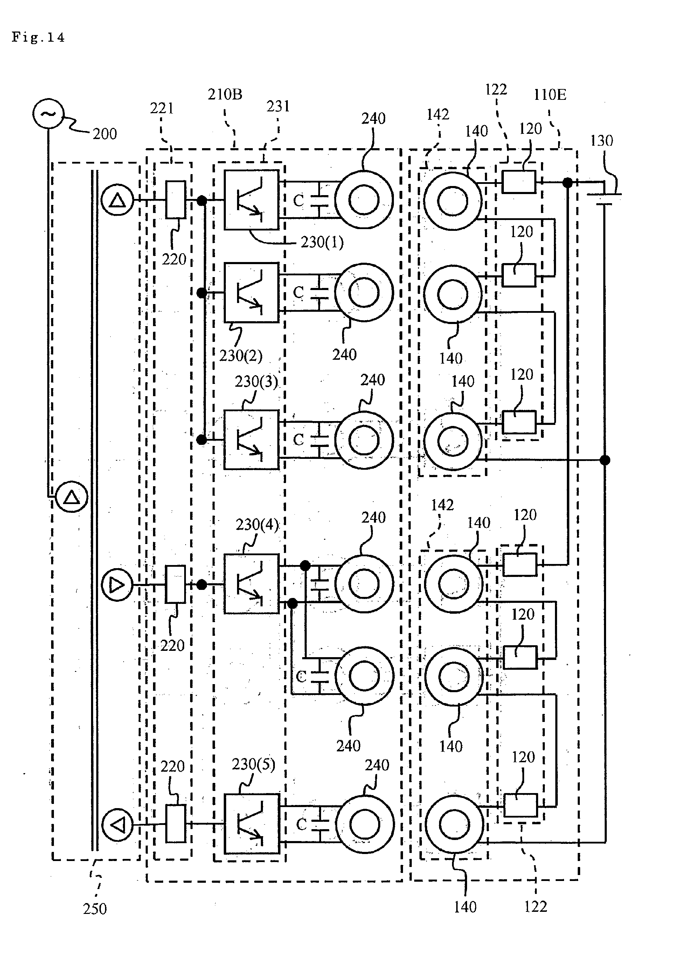

Fig. 14 is a block diagram related to a thirteenth embodiment showing an example of a power-transmitting device for distributing an alternating current power source using a multi-pulse rectifier and driving a plurality of power-transmitting coils with a plurality of driving transformers, and a power-receiving device in which groups comprising pluralities of power-receiving coils connected in series are connected in parallel;

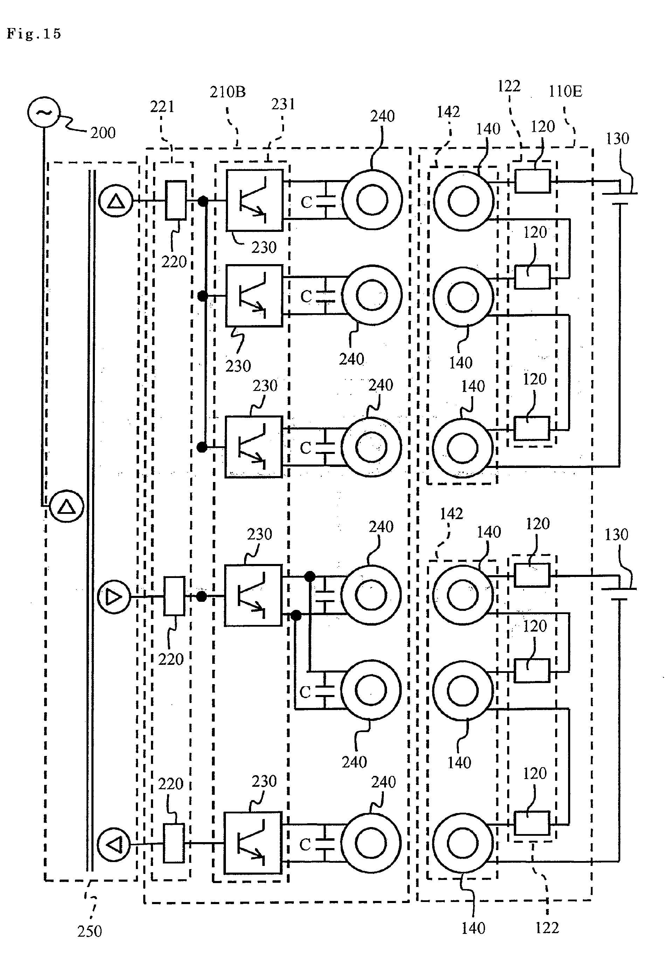

Fig. 15 is a block diagram related to a fourteenth embodiment showing an example of a power-transmitting device for distributing an alternating current power source using a multi-pulse rectifier and driving a plurality of power-transmitting coils with a plurality of driving.transformers, and a power-receiving device comprising a plurality of groups that include a plurality of power-receiving coils connected in series and secondary batteries; and

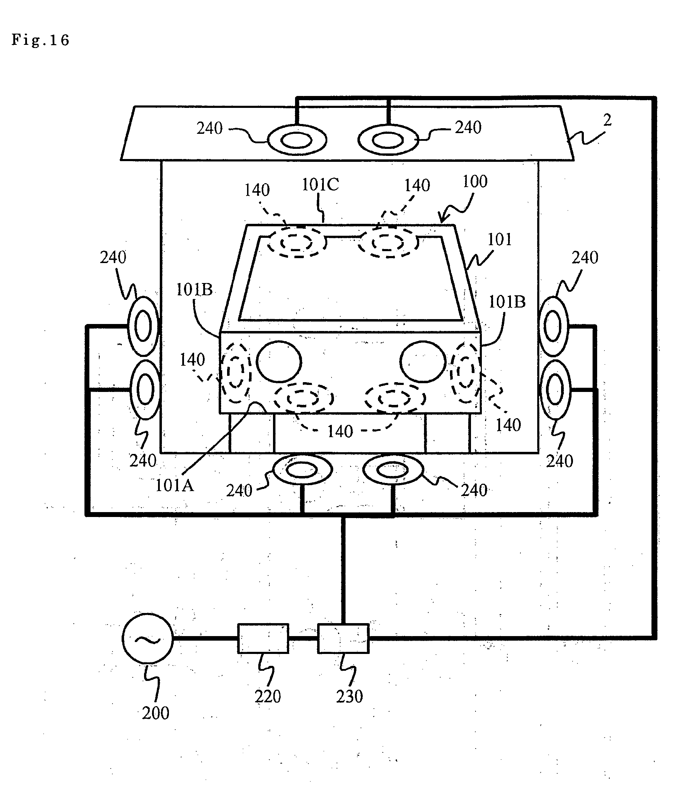

Fig. 16 is a schematic diagram related to a fifteenth embodiment and showing a configuration for transmitting electric power from a plurality of power-transmitting coils distributively arranged in a plurality of indoor wall surfaces to power-receiving coils provided in various parts of a mobile body.

### DESCRIPTION OF THE PREFERRED EMBODIMENTS

Embodiments of the present invention will be described hereinbelow. In the embodiments, as will be described in detail below, in a charging apparatus for transmitting electric power to a mobile body 100 in a non-contact manner, a plurality of "resonance capacitors C and power-transmitting coils 240" parts are driven using either one or a plurality of driving transformers 230. Then, in the embodiments, electric power is transmitted, for example, using a principle such as electromagnetic induction, from the plurality of power-transmitting coils 240 to a plurality of power-receiving coils 140 connected either in series or in parallel. The electric power received by the plurality of power-receiving coils 140 is collected and stored in a secondary battery 130.

Therefore, in the embodiments, electric power can be transmitted via a plurality of routes using a plurality of power-transmitting coils and a plurality of power-receiving coils. This makes it possible to enhance power transmission efficiency in a mobile body in which installation locations and the like are limited.

### [Embodiment 1]

A first embodiment will be described using Figs. 1 and 2. Fig. 1 shows an example in which a non-contact charging apparatus for a mobile body is provided in an electric car 100 as the "mobile body".

The electric car 100, for example, comprises a car body 101, a front wheel 102, a rear wheel 103, an electric motor 104, a steering device, an illumination device, and an air conditioner (none of which is shown in the drawing). This embodiment shows a case of rear-wheel drive, and the electric motor 104, for example, is provided inside the rear wheel 103.

The configuration of the electric car 100 is an example, and the electric car 100 may be a front-wheel-drive system, or may be driven using all four wheels. Also, the present invention may be applied to a mobile body such as an electric truck, an electric motorcycle, an electric wheelchair, and an electrically operated single-passenger mobile body (a so-called personal mobility device).

A plurality of power-receiving coils 140 serving as "receiving parts" are arranged in a distributed manner in separate locations in the floor part 101A, for example, of the car body 101. Each power-receiving coil 140 is connected to the secondary battery 130 via an AC-DC converter 120 for converting alternating-current electric power to direct-current electric power. The power-receiving coil 140 is a secondary coil in the transmission of power by electromagnetic induction. The secondary battery 130 can be of any type. For example, a lead battery, a lithium ion battery, a nickel-hydrogen battery, and a nickel-cadmium battery can be used as the secondary battery 130.

As will be described hereinbelow, a group can be formed from either one or a plurality of power-receiving coils 140 and AC-DC converters 120 (hereinafter, power-receiving coil 140 and so forth), and inside each group, the power-receiving coil 140 and so forth can be connected either in parallel or in series. To obtain the desired voltage value and/or current value, the power-receiving coil 140 and so forth may be connected, as appropriate, in parallel or in series, or may be connected using a combination thereof.

The power-transmitting device 210 is provided in a prescribed location outside of the electric car 100. The prescribed location, for example, may be the stopping/parking location 1 of the electric car 100. The power-transmitting device 210 comprises a plurality of power-transmitting coils 240 as the "transmitting parts" arranged corresponding to the power-receiving coils 140. The power-transmitting coil 240 serves the role of a primary coil.

The number Ct of power-transmitting coils 240 and the number Cr of power-receiving, coils 140 here are set as a natural number equal to or larger than two, and the two numbers may match (Ct = Cr), or not match (Ct > Cr or Ct < Cr).

When the electric car 100 stops in the prescribed location, it is preferable that all of the power-receiving coils 140 are facing the respective power-transmitting coils 240. However, not all of the power-receiving coils 140 need to face the power-transmitting coils 240 exactly. Some of the power-receiving, coils 140 from among the plurality of power-receiving coils. 140. do not need to be able to mate with the power-transmitting coils 240.

An AC-DC converter 220 converts alternating-current electric power from an alternating-current power source 200 to direct-current electric power. A driving transformer 230 supplies the direct-current electric power from the AC-DC converter 220 to the respective power-transmitting coils 240. Each power-transmitting coil 240 generates lines of magnetic force corresponding to the electric power that is inputted. The lines of magnetic force are incident on the opposing power-receiving coil 140, and give rise to an induction current that flows through the power-receiving coil 140. As described hereinabove, the electric current generated by each power-receiving coil 140 is stored in the secondary battery 130.

The circuit configuration drawing of Fig. 2 will be described. The power-transmitting device 210 comprises one AC-DC converter 220 and one driving transformer 230, and electric power is distributed to a plurality (all) of-the power-transmitting coils 240 from a single driving transformer 230. A resonance capacitor C is connected in parallel to each power-transmitting coil 240. When describing the power-transmitting coil 240 below, this coil 240 will be described as including the resonance capacitor C. In this embodiment, an example of the "transmitting part" is configured using the power-transmitting coil 240 and the resonance capacitor C.

The power-receiving device 110 comprises a plurality of power-receiving coils 140 corresponding to the plurality of power-transmitting coils 240, and an AC-DC converter 120 connected in series to each power-receiving coil 140. A receiving circuit set is configured from a power-receiving coil 140 and an AC-DC converter 120. A plurality of receiving circuit sets are connected in parallel to the secondary battery 130.

For the sake of explanation, a reference sign 141 will be assigned to a circuit in which a plurality of power-receiving coils 140 are connected in parallel, and a reference sign 121 will be assigned to a circuit in which a plurality of AC-DC converters 120 are connected in parallel.

Being configured as described hereinabove, this embodiment achieves the following effect. This embodiment provides a plurality of power-receiving coils 140 in the car body 101 of the electric car 100. Thus, for example, even in the case of constraints such as installation area or installation shape as in an electric passenger car or the like, a plurality of power-receiving coils can be arranged in the required numbers, making it possible to enlarge the total area of the power-receiving coils. As a result, non-contact power transmission can be performed efficiently.

In this embodiment, a plurality of power-transmitting coils 240 are driven in parallel using a single driving transformer 230, thereby making it possible to simplify the circuit configuration of the power-transmitting device 210 and to reduce manufacturing costs.

### [Embodiment 2]

A second embodiment will be described using Fig. 3. The following embodiments, to include this embodiment, are equivalent to variations of the first embodiment, and as such, the descriptions will focus on the differences with the first embodiment.

A power-receiving device 110A of this embodiment connects a plurality of power-receiving coils 140 and AC-DC converters 120 in series and stores received electric power in the secondary battery 130. A description will be given by assigning a reference sign 142 to power-receiving coils connected in series, and a reference sign 122 to AC-DC converters connected in series.

This embodiment, being configured like this, achieves the same operational advantage as the first embodiment. In addition, since each power-receiving coil 140 is connected in series in this embodiment, it is possible to obtain the desired voltage value by increasing the charging voltage to the secondary battery 130.

### [Embodiment 3]

A third embodiment will be described using Fig. 4. A power-receiving device 110B of this embodiment charges the secondary battery 130 by connecting in parallel a group of power-receiving coils 141 and a group of AC-DC converters 121 that are connected in parallel (parallel-connection group) and a group of power-receiving coils 142 and a group of AC-DC converters 122 that are connected in series (series-connection group).

Focusing on the power-transmitting device 210, with the exception of the fact that the number of power-transmitting coils 240 and the number of resonance capacitors C have increased in proportion to the increase in the number of power-receiving coils 140 of the power-receiving device 110B, the configuration is the same as that of the power-transmitting device 210 described in the first embodiment.

This embodiment, being configured like this, achieves the same operational advantage as the first embodiment. In addition, in this embodiment, it is possible to increase the charging current value in accordance with the group of power-receiving coils 141 connected in parallel, and to increase the charging voltage value in accordance with the group of power-receiving coils 142 connected in series. That is, the desired charging current value and charging voltage value can easily be obtained by connecting in parallel the parallel-connection group and the series-connection group.

### [Embodiment 4]

A fourth embodiment will be described using Fig. 5. A power-receiving device 110C of this embodiment charges the secondary battery 130 by connecting in series a group of power-receiving coils 141 and a group of AC-DC converters 121 that are connected in parallel and a group of power-receiving coils 142 and a group of AC-DC converters 122 that are connected in series. This embodiment, being configured like this, achieves the same operational advantage as the third embodiment.

### [Embodiment 5]

A fifth embodiment will be described using Fig. 6. A power-receiving device 110D of this embodiment charges the secondary battery 130 by connecting in parallel a plurality of groups of power-receiving coils 141 and groups of AC-DC. converters 121 that are connected in parallel (parallel-connection groups). This embodiment, being configured like this, achieves the same operational advantage as the third embodiment.

### [Embodiment 6]

A sixth embodiment will be described using Fig. 7. A power-receiving device 110E of this embodiment charges the secondary battery 130 by connecting in parallel a plurality of groups of power-receiving coils 142 and groups of AC-DC, converters 122 that are connected in series (series-connection groups). This embodiment, being configured like this, achieves the same operational advantage as the third embodiment.

### [Embodiment 7]

A seventh embodiment will be described by referring to Fig. 8. A power-transmitting device 210A of this embodiment drives a plurality of power-transmitting coils 240 with respective driving transformers 230. Electric power from an alternating-current power source 200 is distributed to the driving transformers 230 by way of an AC-DC converter 220, and sent to the power-transmitting coils 240 from the driving transformers 230. A group comprising a plurality of driving transformers 230 will be called a driving transformer group 231. The power-receiving device 110 is the same as the power-receiving device 110 described in the first embodiment.

This embodiment, being configured like this, achieves practically the same operational advantage as the first embodiment. In this embodiment, since each of a plurality of power-transmitting coils 240 is driven by a dedicated driving transformer 230, the number of components increases compared to the first embodiment. However, in this embodiment; even in a case where any one of the driving transformers 230 should fail, it is possible to send electric power from the other driving transformers 230 and power-transmitting coils 240 to the power-receiving device 110 in a non-contact manner. Therefore, this embodiment improves fault tolerance and reliability.

### [Embodiment 8]

An eighth embodiment will be described using Fig. 9. This embodiment mates a power-transmitting device 210A that drives each of a plurality of power-transmitting coils 240 using a dedicated driving transformer 230 with a power-receiving device 110A that connects a plurality of power-receiving coils 140 in series. This embodiment, being configured like this, achieves the same operational advantage as the seventh embodiment.

### [Embodiment 9]

A ninth embodiment will be described using Fig. 10. This embodiment mates a power-transmitting device 210A that drives each of a plurality of power-transmitting coils 240 using a dedicated driving transformer 230 with a power-receiving device 110B that connects in parallel a group of power-receiving coils 141 that are connected in parallel and a group of power-receiving coils 142 that are connected in series. This embodiment, being configured like this, achieves the same operational advantage as the seventh embodiment.

### [Embodiment 10]

A tenth embodiment will be described using Fig. 11. This embodiment mates a power-transmitting device 210A that drives each of a plurality of power-transmitting coils 240 using a dedicated driving transformer 230 with a power-receiving device 110C that connects in series a group of power-receiving coils 141 that are connected in parallel and a group of power-receiving coils 142 that are connected in series. This embodiment, being configured like this, achieves the same operational advantage as the seventh embodiment.

### [Embodiment 11]

An eleventh embodiment will be described using Fig. 12. This embodiment mates a power-transmitting device 210A that drives each of a plurality of power-transmitting coils 240 using a dedicated driving transformer 230 with a power-receiving device 110D that connects in series a plurality of power-receiving coils 141 that are connected in parallel. This embodiment, being configured like this, achieves the same operational advantage as the seventh embodiment.

### [Embodiment 12]

A twelfth-embodiment will be described by referring to Fig. 13. This embodiment mates a power-transmitting device 210A that drives each of a plurality of power-transmitting coils 240 using a dedicated driving transformer 230 with a power-receiving device 110E that connects in parallel a plurality of power-receiving coils 142 that are connected in series. This embodiment, being configured like this, achieves the same operational advantage as the seventh embodiment.

### [Embodiment 13]

A thirteenth embodiment will be described by referring to Fig. 14. A power-transmitting device 210B of this embodiment distributes power from an alternating-current power source 200 to a plurality of AC-DC converters 220 by way of a multi-pulse rectifier 250, and the respective AC-DC converters 220 supply the electric power to either one or a plurality of driving transformers 230. Each driving transformer 230 drives either one or a plurality of power-transmitting coils 240.

For example, three driving transformers 230 (1) through 230 (3), which receive electric power distributed from a common AC-DC converter 220, each drives one power-transmitting coil 240. A fourth driving transformer 230 (4) drives a plurality (for example, two) power-transmitting coils 240 in parallel. A fifth driving transformer 230 shown at the bottom of Fig. 14 drives one power-transmitting coil 240.

The power-receiving device 110E is the same as that described using Fig. 13, and charges the secondary battery 130 by connecting in parallel a plurality of power-receiving coils 142 that are connected in series. This embodiment, being configured like this, achieves the same operational advantage as the seventh embodiment.

### [Embodiment 14]

A fourteenth embodiment will be described using Fig. 15. This embodiment mates the power-transmitting device 210B described in the thirteenth embodiment (Fig. 14) with the power-receiving device 110E described in the twelfth embodiment (Fig. 13). This embodiment, being configured like this, achieves the same operational advantage as the seventh embodiment.

### [Embodiment 15]

A fifteenth embodiment will be described using Fig. 16. This embodiment describes another method of installing a non-contact charging apparatus for a mobile body.

A building 2 is, for example, a garage or shed for accommodating the electric car 100. Either one or a plurality of power-receiving coils 140 is distributively arranged, for example, in each of a floor part 101A, two side parts 101B, and a roof part 101C in the car body 101 of the electric car 100.

Either one or a plurality of power-transmitting coils 240 is arranged in each of a ceiling part, two sidewall parts, and a floor part of the building 2 so as to correspond to the power-receiving coils 140 arranged in the respective locations of the car body 101. Any of the configurations described in the abovementioned embodiments may be used to electrically connect the power-transmitting coils 240 and the power-receiving coils 140.

Power-receiving coils 140 are distributed in-various locations of the car body 101, and a plurality of power-transmitting coils 240 are arranged inside the building 2 to correspond to the power-receiving coils 140. This makes the configuration of the electrical circuit complicated, but enables the coil area for power transmission to be made larger and more electric power to be transmitted in a non-contact manner.

Fig. 1 shows an example in which a plurality of power-receiving coils 140 are arranged in one surface (floor surface) of the plurality of: external surfaces of the car body 101, and Fig. 16 shows an example in which a plurality of power-receiving coils 140 are provided in a prescribed plurality of sides of the plurality of external sides of the car body 101.

The present invention is not limited to the embodiments described hereinabove. A person skilled in the art can make a variety of additions and changes without departing from the scope of the present invention. The embodiments describe cases in which electric power is transmitted using an electromagnetic induction method, but a radio wave method for receiving radio waves and converting the radio waves into direct-current electric power, and a resonance method for transmitting electric power using the resonance of either an electrical field or a magnetic field may be used instead.

In addition, the embodiments were described by giving the example of an electric car, but the present invention may also be applied to an automobile that uses an internal combustion engine and an electric motor together, like the so-called hybrid car.

The present invention described hereinabove can also be understood as an electrically operated mobile body as set forth below. In the following wording, the reference signs of the drawings will be cited for the sake of understanding, but the present invention is not limited to the configurations of the drawings.

"Wording 1. An electrically operated mobile body 100 that moves using electric power transmitted from the outside, the electrically operated mobile body comprising:
a car body 101;
a plurality of receiving part 140 arranged in prescribed surfaces of the car body for receiving electric power from the outside; and
a circuit 120 for charging a secondary battery 130 using the electric power received via the plurality of receiving parts."

## Claims

1. A non-contact charging apparatus for a mobile body for supplying electric power to a mobile body in a non-contact manner,
the non-contact charging apparatus comprising:
a power-receiving device disposed in the mobile body; and
a power-transmitting device disposed in a manner of non-contact with the power-receiving device, wherein
the power-receiving device comprises a plurality of receiving parts distributively arranged in prescribed locations of the mobile body to receive electric power from the outside, and
the power-transmitting device comprises a plurality of transmitting parts arranged in prescribed locations outside of the mobile body corresponding to the plurality of receiving parts to transmit electric power.

2. A non-contact charging apparatus for a mobile body according to claim 1, wherein
the plurality of transmitting parts are primary coils,
the plurality of receiving parts are secondary coils, and
the power-transmitting device transmits electric power to the power-receiving device by using electromagnetic induction.

3. A non-contact charging apparatus for a mobile body according to claim 2, wherein the power-transmitting device uses at least one driving part to drive the plurality of transmitting parts in parallel.

4. A non-contact charging apparatus for a mobile body according to claim 3, wherein a resonance capacitor is connected to each of the plurality of transmitting parts.

5. A non-contact charging apparatus for a mobile body according to claim 1, wherein a desired electric current is obtained by connecting the plurality of receiving parts in parallel.

6. A non-contact charging apparatus for a mobile body according to claim 1, wherein a desired electric voltage is obtained by connected the plurality of receiving parts in series.

7. A non-contact charging apparatus for a mobile body according to claim 1, wherein the plurality of receiving parts are grouped into a plurality of groups, a determination is made as to whether the plurality of groups are to be connected one another in parallel or connected in series, and, in addition, the plurality of groups can be either connected in series or connected in parallel.

8. A non-contact charging apparatus for a mobile body according to claim 3, wherein
a plurality of the driving parts are provided, and
the alternating-current power source is distributed among the plurality of driving parts prior to being converted to a direct-current power source.

9. A non-contact charging apparatus for a mobile body according to claim 3, wherein the alternating-current power source is distributed among the plurality of driving parts after being converted to a direct-current power source.

10. A method for a non-contact charging apparatus for a mobile body to supply power to a mobile body in a non-contact manner, the non-contact charging apparatus having:
a power-receiving device disposed in the mobile body; and
a power-transmitting device disposed in a manner of non-contact with the power-receiving device,
the power-receiving device having a plurality of receiving parts distributively arranged in prescribed locations of the mobile body to receive electric power from outside, and
the power-transmitting device having a plurality of transmitting parts arranged in prescribed locations outside of the mobile body corresponding to the plurality of receiving parts to transmit electric power,
the method comprising:
transmitting electric power from the power-transmitting device via the plurality of transmitting parts when the mobile body has stopped inside a preset prescribed area; and
operating the power-receiving device to accumulate electric power received by the plurality of receiving parts in a secondary battery.
